# EUROPEAN PATENT SPECIFICATION

(11) **EP 2 792 868 B1**
(45) Date of publication and mention of the grant of the patent: **09.08.2017**
(21) Application number: 12858657.5
(22) Date of filing: 12.12.2012
(51) Int. Cl.: F02B 37/007, F02B 29/04, F02M 35/12, F01D 25/30, F02C 6/12, F02C 7/045

(54) **EXHAUST TURBINE SUPERCHARGER**
ABGASTURBINENSUPERLADER
COMPRESSEUR DE SURALIMENTATION POUR TURBINE D'ÉCHAPPEMENT

(30) Priority: 16.12.2011 JP 2011275980
(43) Date of publication of application: 22.10.2014
(73) Proprietor: Mitsubishi Heavy Industries, Ltd., Tokyo 108-8215 (JP)
(72) Inventor: SHIRAISHI, Keiichi, Tokyo 108-8215 (JP)
(74) Representative: Hoffmann Eitle
(86) International application number: PCT/JP2012/082259
(87) International publication number: WO 2013/089159

(56) References cited:
- EP-A2- 1 510 667
- JP-A- S51 120 315
- JP-A- 2001 295 623
- JP-A- 2010 127 239
- JP-U- S60 114 245
- US-A1- 2006 080 958
- US-A1- 2011 239 648

## Description

### {Technical Field}

The present invention relates to an exhaust turbine turbocharger, and, more particularly, to a silencer that is attached so as to cover a silencer attached to an exhaust turbine turbocharger. The present invention further relates to an exhaust gas turbocharger and an internal combustion engine.

### {Background Art}

For example, an (exhaust turbine) turbocharger 1 illustrated in Fig. 1 and Fig. 3 of Japanese Unexamined Patent Application, Publication No. 2011-43139 is known as an exhaust turbine turbocharger attached to a marine internal combustion engine.

US 2011/239648 A1 discloses a silencer cover which represents the closest prior art.

### {Summary of Invention}

### {Technical Problem}

The turbocharger 1 illustrated in Fig. 1 of Japanese Unexamined Patent Application, Publication No. 2011-43139 includes a silencer 11d of cylindrical outer-circumference suction type that suctions air in all directions along the circumferential direction. Hence, from a side closer to a marine internal combustion engine on which the turbocharger 1 is mounted (a side closer to an exhaust collecting pipe 34 in Fig. 1 of Japanese Unexamined Patent Application, Publication No. 2011-43139), high-temperature air containing heat generated by an operation of the internal combustion engine is suctioned via the silencer 11d. From a side farther from the marine internal combustion engine (a side opposite to the exhaust collecting pipe 34 in Fig. 1 of Japanese Unexamined Patent Application, Publication No. 2011-43139), relatively low-temperature air is suctioned via the silencer 11d. As a result, the temperature of air that is suctioned into a compressor 3 via the silencer 11d (suctioned air temperature) may become higher as a whole, the work power necessary for compression by the compressor 3 may become larger, the pressure of air that is sent by the turbocharger 1 to the marine internal combustion engine may become lower, and the performance and fuel efficiency of the marine internal combustion engine may be deteriorated.
US 2006/0080958 A1 describes a cover for an airbox. Further, JP 2010 127 239 A shows a supercharger having an intake air silencer arranged upstream of the compressor.

The present invention, which has been made in view of the above-mentioned problems, has an object to provide an exhaust turbine turbocharger capable of making lower the temperature of air that is suctioned into a compressor via a silencer.

### {Solution to Problem}

This object is solved by a silencer cover with the features of claim 1, an exhaust gas turbocharger according to claim 6 and an internal combustion engine according to claim 7. Preferred embodiments follow from the other claims.

A silencer cover according to a first aspect of the present invention is a silencer cover that is attached so as to cover an outer area of an outer surface of a silencer formed into a columnar shape. The silencer is attached to an air suction port of an exhaust turbine turbocharger and has, mounted thereon, a large number of sound absorbing elements for sound deadening of air suctioned from an outer area in a radial direction. The exhaust turbine turbocharger includes: a turbine rotationally driven by exhaust gas guided from an internal combustion engine; a rotating shaft having one end at which the turbine is provided; and a compressor that is provided at another end of the rotating shaft and is rotationally driven by the rotational drive of the turbine, to thereby compress air. The silencer cover includes: a first side wall that is placed so as to be parallel to the outer surface on a side farther from the compressor and spaced apart by a predetermined distance from the outer surface; a second side wall that is placed so as to be parallel to the outer surface on a side closer to the compressor and spaced apart by a predetermined distance from the outer surface; and a peripheral wall that is placed so as to be spaced apart by a predetermined distance from the outer surface along a circumferential direction, both end surfaces of the peripheral wall, one end surface of the first side wall, and one end surface of the second side wall forming an opening, two end surfaces of the peripheral wall excluding both the end surfaces being respectively joined to an end surface of the first side wall excluding the one end surface and an end surface of the second side wall excluding the one end surface, to thereby form an occluded space inside of the opening. The opening is formed so as not to face the internal combustion engine.

According to the silencer cover according to the first aspect, the amount of high-temperature air that exists on a side closer to the internal combustion engine and is suctioned into the compressor via the silencer decreases, and the amount of low-temperature air that exists on a side farther from the internal combustion engine and is suctioned into the compressor via the silencer increases.

This can make lower the temperature of the air that is suctioned into the compressor via the silencer.

In the silencer cover according to the first aspect, the opening may face the side farther from the internal combustion engine such that the air that exists on the side farther from the internal combustion engine is more suctioned from the air suction port into the compressor via the silencer.

According to the above-mentioned silencer cover, the high-temperature air that exists on the side closer to the internal combustion engine is not suctioned into the compressor via the silencer, and the low-temperature air that exists on the side farther from the internal combustion engine is more suctioned into the compressor via the silencer.

This can make further lower the temperature of the air that is suctioned into the compressor via the silencer.

The silencer cover according to the first aspect may cover one-half to three-quarters in the circumferential direction, of the outer area of the outer surface of the silencer.

According to the above-mentioned silencer cover, the suction amount of the high-temperature air that exists on the side closer to the internal combustion engine is smallest, and the suction amount of the low-temperature air that exists on the side farther from the internal combustion engine is largest.

This can make lowest the temperature of the air that is suctioned into the compressor via the silencer.

In the silencer cover according to the first aspect, noise insulation lagging may be applied to an entire inner surface of the first side wall, an entire inner surface of the second side wall, and an entire inner surface of the peripheral wall.

According to the above-mentioned silencer cover, undesired sounds generated around the silencer can be reduced.

Further, the number of the sound absorbing elements of the silencer that exist in the space formed inside of the opening can be reduced by an amount corresponding to the undesired sounds reduced by applying the noise insulation lagging, whereby costs of the silencer can be reduced.

In the silencer cover according to the first aspect, guide vanes may be respectively provided over both the entire end surfaces of the peripheral wall.

According to the above-mentioned silencer cover, the suction efficiency of the air that flows into the space formed inside of the opening can be improved, and hence a larger amount of air can be allowed to flow into the space formed inside of the opening.

An exhaust turbine turbocharger according to a second aspect of the present invention includes the silencer cover having any one of the above-mentioned features.

According to the exhaust turbine turbocharger according to the second aspect, the temperature of the air that is suctioned into the compressor via the silencer becomes lower, and the work power necessary for compression by the compressor becomes smaller. Hence, the pressure of the air sent to the internal combustion engine can be made higher.

An internal combustion engine according to a third aspect of the present invention includes the above-mentioned exhaust turbine turbocharger.

According to the internal combustion engine according to the third aspect, the high-pressure and low-temperature air is sent from the exhaust turbine turbocharger, and hence the performance and fuel efficiency of the internal combustion engine can be improved.

### {Advantageous Effects of Invention}

An exhaust turbine turbocharger according to the present invention can produce an advantage of making lower the temperature of air that is suctioned into a compressor via a silencer.

### {Brief Description of Drawings}

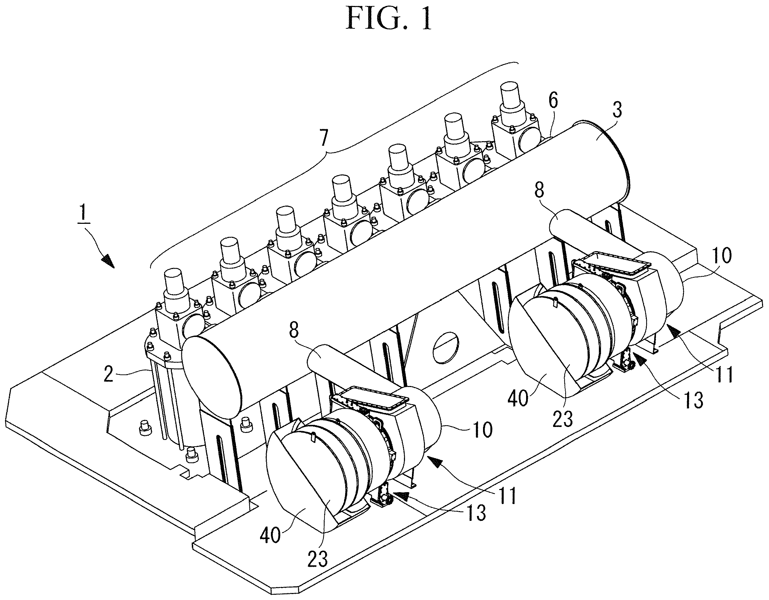

{Fig. 1}
   Fig. 1 is a perspective view schematically illustrating an internal combustion engine on which an exhaust turbine turbocharger according to a first embodiment of the present invention is mounted.
{Fig. 2}
   Fig. 2 is a perspective view schematically illustrating the exhaust turbine turbocharger according to the first embodiment of the present invention.
{Fig. 3}
   Fig. 3 is a cross-sectional view schematically illustrating the exhaust turbine turbocharger according to the first embodiment of the present invention.
{Fig. 4}
   Fig. 4 is a cross-sectional view taken along arrows IV-IV in Fig. 3.
{Fig. 5}
   Fig. 5 is an explanatory view of an exhaust turbine turbocharger according to a second embodiment of the present invention, the view being similar to Fig. 4.
{Fig. 6}
   Fig. 6 is an explanatory view of an exhaust turbine turbocharger according to a third embodiment of the present invention, the view being similar to Fig. 2.

### {Description of Embodiments}

### (First Embodiment)

Hereinafter, a first embodiment of an exhaust turbine turbocharger according to the present invention is described with reference to Fig. 1 to Fig. 4.

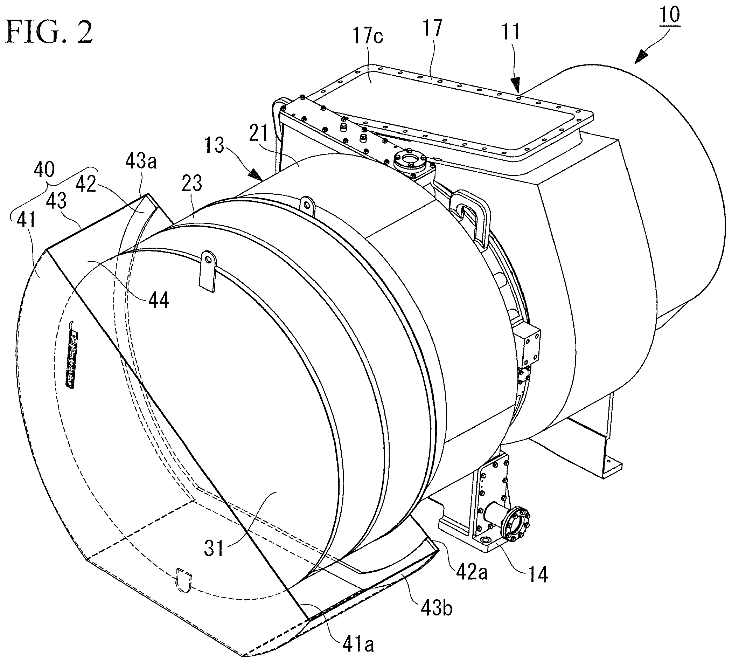

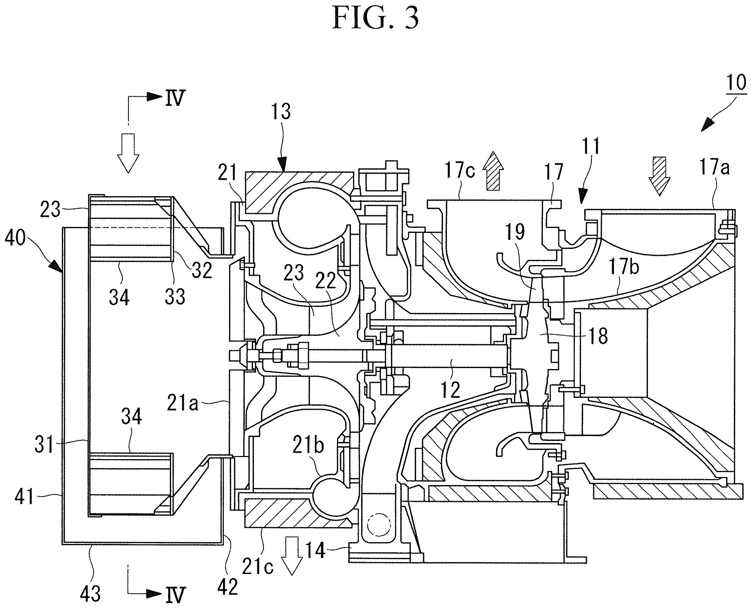

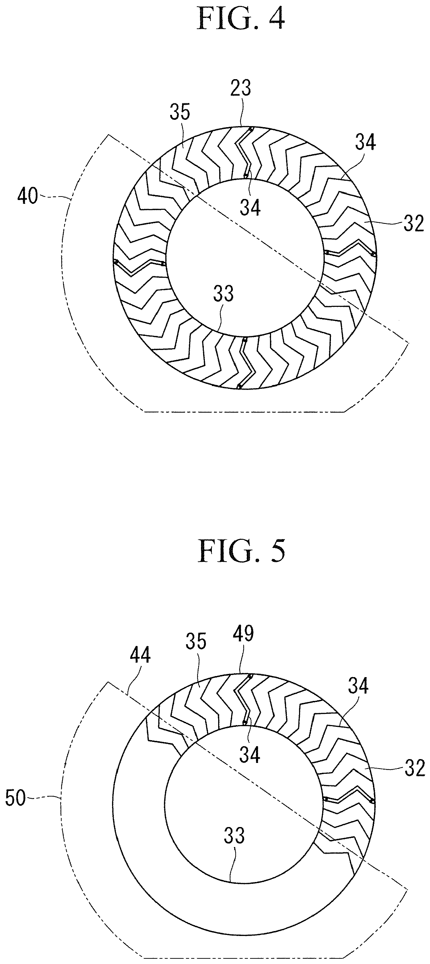

Fig. 1 is a perspective view schematically illustrating a marine internal combustion engine (a two-cycle low-speed diesel engine mainly used as a marine main engine) on which an exhaust turbine turbocharger according to the present embodiment is mounted. Fig. 2 is a perspective view schematically illustrating the exhaust turbine turbocharger according to the present embodiment. Fig. 3 is a cross-sectional view schematically illustrating the exhaust turbine turbocharger according to the present embodiment. Fig. 4 is a cross-sectional view taken along arrows IV-IV in Fig. 3.

As illustrated in Fig. 1, a marine internal combustion engine 1 includes cylinder units 2 and an exhaust receiver (exhaust collecting pipe; exhaust manifold) 3, and is placed in an engine room (not illustrated) of a ship. Further, a plurality of (in present embodiment, two) exhaust turbine turbochargers 10 and a plurality of air coolers (not illustrated) are mounted on the marine internal combustion engine 1.

A piston (not illustrated) coupled to a crankshaft is placed in each cylinder unit 2. Further, an exhaust port (not illustrated) of each cylinder unit 2 is communicated with (connected to) the exhaust receiver 3 via a (first) exhaust pipe 6. An exhaust valve 7 is placed in a portion of each exhaust pipe 6 that is opened for the cylinder unit 2, and opens and closes this opened portion. Moreover, the exhaust receiver 3 is communicated with (connected to) a turbine 11 of each exhaust turbine turbocharger 10 via a (second) exhaust pipe 8.

As illustrated in at least one of Fig. 2 and Fig. 3, the exhaust turbine turbocharger 10 includes: the turbine 11 driven by exhaust gas discharged by the marine internal combustion engine 1; a rotating shaft 12 rotationally driven by the turbine 11; a compressor 13 that compresses air by the rotational drive of the rotating shaft 12; and a bearing pedestal 14 that is provided between the turbine 11 and the compressor 13 and supports the rotating shaft 12.

The turbine 11 includes: a turbine casing 17; a turbine disc 18 rotated by the exhaust gas supplied from the marine internal combustion engine 1 (see Fig. 1); and turbine blades 19 provided in the circumferential direction of the turbine disc 18.

The turbine casing 17 is provided so as to cover the turbine disc 18 and the turbine blades 19. The turbine casing 17 includes: a turbine casing inlet 17a to which the exhaust gas is guided from the exhaust receiver 3 (see Fig. 1) of the marine internal combustion engine 1; an exhaust gas passage 17b that guides the exhaust gas of the marine internal combustion engine 1 to the turbine blades 19; and a turbine casing outlet 17c that guides the exhaust gas that has passed through the turbine blades 19, to the outside of the exhaust turbine turbocharger 10.

The turbine disc 18 has a discoid shape, and is provided with the plurality of turbine blades 19 along the circumferential direction of the turbine disc 18. The turbine blades 19 extend outward in the radial direction of the turbine disc 18 from the rotation center thereof. The turbine blades 19 are covered by the turbine casing 17 such that the outer sides thereof in the radial direction are surrounded by the turbine casing 17. The exhaust gas is guided to the turbine blades 19 through the exhaust gas passage 17b. The turbine disc 18 and the rotating shaft 12 are rotationally driven by the exhaust gas that has been guided to the turbine blades 19. The exhaust gas that has rotationally driven the turbine disc 18 and the rotating shaft 12 flows out from the turbine blades 19 to the turbine casing outlet 17c.

The compressor 13 includes a compressor casing 21 and an impeller 22 that is rotationally driven to thereby compress air.

The compressor casing 21 is provided so as to cover the impeller 22. The compressor casing 21 includes: a compressor casing inlet 21a that takes air in from the outside via a silencer 23; a scroll housing 21b to which the air compressed by the impeller 22 is guided; and a compressor casing outlet 21c that discharges the air compressed by the impeller 22.

The impeller 22 has a substantially discoid shape, and is provided with a plurality of blades 23 on one surface thereof. The blades 23 extend outward in the radial direction of the impeller 22 from the center thereof. The impeller 22 is covered by the scroll housing 21b such that the outer side thereof in the radial direction is surrounded by the scroll housing 21b. The air taken in from the compressor casing inlet 21a is guided to the impeller 22. The impeller 22 is rotationally driven by the rotational drive of the coaxially provided turbine 11. The air taken in from the compressor casing inlet 21a is compressed by the impeller 22 being rotationally driven, and the compressed air is sent outward in the radial direction of the impeller 22. The air compressed by the impeller 22 passes through the scroll housing 21b, and flows out from the compressor casing outlet 21c to the air cooler.

The rotating shaft 12 is inserted through the bearing pedestal 14 in the state where one end of the rotating shaft 12 protrudes toward the turbine 11 and where another end thereof protrudes toward the compressor 13. Further, the turbine casing 17 and the compressor casing 21 are connected to the bearing pedestal 14. The turbine casing 17, the bearing pedestal 14, and the compressor casing 21 are integrally fastened to each other using bolts (not illustrated).

As illustrated in at least one of Fig. 3 and Fig. 4, the silencer 23 is a silencer of cylindrical outer-circumference suction type, and includes two circular plates 31, 32 that are arranged parallel to each other with a space therebetween. The outer diameters of the circular plates 31, 32 are equal to each other. A relatively large-diameter circular hole 33 for air circulation is concentrically formed in a central part in the radial direction of the circular plate 32 located on the compressor 13 side, of the two circular plates 31, 32.

A plurality of Z-shaped reinforcement rods (not illustrated) are bridged over between outer circumferential edges of the circular plates 31, 32 so as to be aligned in the circumferential direction, and the reinforcement rods hold the space between the circular plates 31, 32. A wire net (not illustrated) is wound around the outer side of each reinforcement rod, and a filter (not illustrated) for removing dirt and dust in air is wound around the outer side of the wire net.

Meanwhile, a large number of sound absorbing splitters (sound absorbing elements) 34 each having a substantial Z shape as a whole are arranged between the circular plates 31, 32 so as to be fixed to the circular plates 31, 32.

Note that, in Fig. 4, the other sound absorbing splitters 34 than the four sound absorbing splitters 34 illustrated at the positions of 12 o'clock, 3 o'clock, 6 o'clock, and 9 o'clock are each illustrated using a simple one line for convenience sake, but each have the same shape as those of the four sound absorbing splitters 34 illustrated at the positions of 12 o'clock, 3 o'clock, 6 o'clock, and 9 o'clock. Further, reference sign 35 in Fig. 4 denotes an air passage formed between adjacent ones of the sound absorbing splitters 34.

Next, the exhaust turbine turbocharger 10 according to the present embodiment includes a silencer cover 40.

In the state where the exhaust turbine turbocharger 10 is mounted on the marine internal combustion engine 1, the silencer cover 40 serves to guide, to the silencer 23, relatively low-temperature air that exists on a side farther from the marine internal combustion engine 1 (a side opposite to the exhaust receiver 3) (air having a temperature lower than that of air that exists on the marine internal combustion engine 1 side (the exhaust receiver 3 side)) such that the relatively low-temperature air that exists on the side farther from the marine internal combustion engine 1 is more suctioned (more actively suctioned) into the compressor 13 via the silencer 23. The silencer cover 40 includes a first side wall 41, a second side wall 42, and a peripheral wall 43.

The first side wall 41 is placed so as to be parallel to the circular plate 31 and spaced apart by a predetermined distance from the circular plate 31. The first side wall 41 is a plate-like member formed such that one end surface (one side) 41a thereof that is not joined to the peripheral wall 43 faces the side farther from the marine internal combustion engine 1 and faces obliquely upward in the state where the exhaust turbine turbocharger 10 is mounted on the marine internal combustion engine 1.

The second side wall 42 is placed so as to be parallel to the circular plate 32 and spaced apart by a predetermined distance from the circular plate 32. The second side wall 42 is a plate-like member having the same shape as that of the first side wall 41, that is, a plate-like member formed such that one end surface (one side) 42a thereof that is not joined to the peripheral wall 43 faces the side farther from the marine internal combustion engine 1 and faces obliquely upward in the state where the exhaust turbine turbocharger 10 is mounted on the marine internal combustion engine 1.

The peripheral wall 43 is placed so as to be spaced apart by a predetermined distance from the outer circumferential surface of the silencer 23. The peripheral wall 43 is a plate-like member that is joined to an end surface (an end surface excluding the one end surface 41a) of the first side wall 41 and an end surface (an end surface excluding the one end surface 42a) of the second side wall 42, the first side wall 41 and the second side wall 42 being placed parallel to each other such that the one end surface 41a and the one end surface 42a face the same direction.

Further, an opening 44 is formed by: the one end surfaces 41a, 42a that are not joined to the peripheral wall 43; and both end surfaces (two sides) 43a, 43b of the peripheral wall 43 that are not joined to the first side wall 41 and the second side wall 42. The air that has flown into the silencer cover 40 via the opening 44 is suctioned into the silencer 23 covered by the silencer cover 40.

According to the silencer cover 40 according to the present embodiment, the amount of the high-temperature air that exists on the side closer to the marine internal combustion engine 1 and is suctioned into the compressor 13 via the silencer 23 decreases, and the amount of the low-temperature air that exists on the side farther from the marine internal combustion engine 1 and is suctioned into the compressor 13 via the silencer 23 increases.

This can make lower the temperature of the air that is suctioned into the compressor 13 via the silencer 23.

Further, according to the silencer cover 40 according to the present embodiment, the opening 44 faces the side farther from the marine internal combustion engine 1 such that the air that exists on the side farther from the marine internal combustion engine 1 is more suctioned into the compressor 13 via the silencer 23.

That is, the high-temperature air that exists on the side closer to the marine internal combustion engine 1 is not suctioned into the compressor via the silencer 23, and the low-temperature air that exists on the side farther from the marine internal combustion engine 1 is more suctioned into the compressor 13 via the silencer 23.

This can make further lower the temperature of the air that is suctioned into the compressor 13 via the silencer 23.

According to the exhaust turbine turbocharger 10 according to the present embodiment, the temperature of the air that is suctioned into the compressor 13 via the silencer 23 becomes lower, and the work power necessary for compression by the compressor 13 becomes smaller. Hence, the pressure of air sent to the marine internal combustion engine 1 can be made higher.

According to the marine internal combustion engine 1 according to the present embodiment, the high-pressure and low-temperature air is sent from the exhaust turbine turbocharger 10, and hence the performance and fuel efficiency of the marine internal combustion engine 1 can be improved.

### (Second Embodiment)

A second embodiment of the exhaust turbine turbocharger according to the present invention is described with reference to Fig. 5.

Fig. 5 is an explanatory view of an exhaust turbine turbocharger according to the present embodiment, the view being similar to Fig. 4.

The exhaust turbine turbocharger (not illustrated) according to the present embodiment is different from that in the first embodiment in that a silencer 49 and a silencer cover 50 are provided instead of the silencer 23 and the silencer cover 40. The other components are the same as those in the first embodiment, and hence description of the other components is omitted here.

Note that the same components as those in the first embodiment are denoted by the same reference signs.

The silencer cover 50 is different from the silencer cover 40 in the first embodiment in that noise insulation lagging for reducing undesired sounds by attaching a sound absorbing material such as glass wool is applied to the entire inner surface of the first side wall 41, the entire inner surface of the second side wall 42, and the entire inner surface of the peripheral wall 43.

Further, as illustrated in Fig. 5, the silencer 49 is different from the silencer 23 in the first embodiment in that the sound absorbing splitters 34 are provided only on a side of the silencer 49 on which the air in the engine room flows in, that is, provided only in: a portion of the silencer 49 that is not covered by the silencer cover 50 (a portion thereof that protrudes from the silencer cover 50); and a portion thereof that is covered by the silencer cover 50 (a portion thereof that does not protrude from the silencer cover 50) and is located in the vicinity of the opening 44.

According to the silencer cover 50 according to the present embodiment, the noise insulation lagging is applied to the entire inner surface of the first side wall 41, the entire inner surface of the second side wall 42, and the entire inner surface of the peripheral wall 43, and the sound absorbing splitters 34 are provided only on the side of the silencer 49 on which the air in the engine room flows in, that is, provided only in: the portion of the silencer 49 that is not covered by the silencer cover 50 (the portion thereof that protrudes from the silencer cover 50); and the portion thereof that is covered by the silencer cover 50 (the portion thereof that does not protrude from the silencer cover 50) and is located in the vicinity of the opening 44.

This can reduce the number of the sound absorbing elements 34 of the silencer 49 that exist in a space formed inside of the opening 44, to thereby reduce costs of the silencer 49.

Other operations and effects are the same as those in the first embodiment, and hence description thereof is omitted here.

### (Third Embodiment)

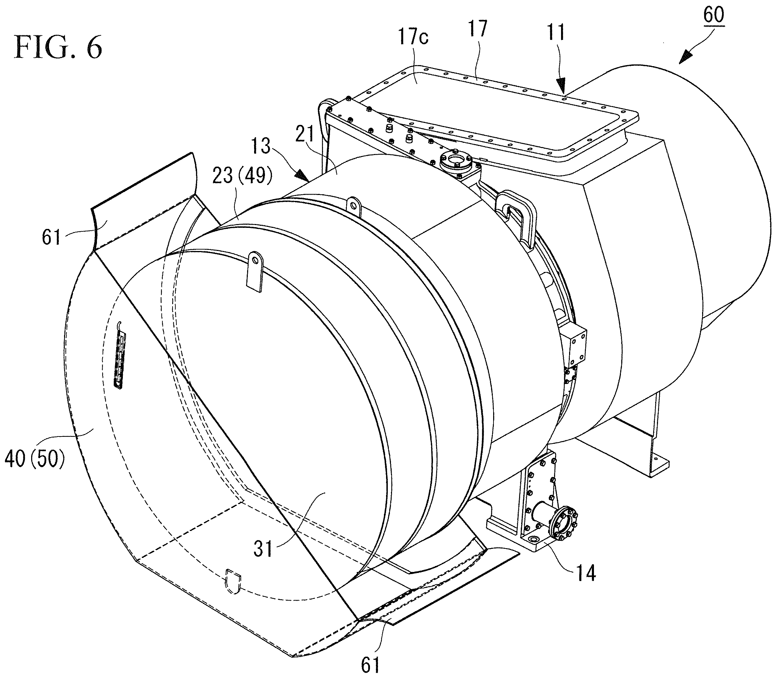

A third embodiment of the exhaust turbine turbocharger according to the present invention is described with reference to Fig. 6.

Fig. 6 is an explanatory view of an exhaust turbine turbocharger according to the present embodiment, the view being similar to Fig. 2.

As illustrated in Fig. 6, an exhaust turbine turbocharger 60 according to the present embodiment is different from that in the first embodiment (second embodiment) in that guide vanes 61 are respectively provided over both the entire end surfaces 43a, 43b of the peripheral wall 43 of the silencer cover 40 (50). The other components are the same as those in the first embodiment (second embodiment), and hence description of the other components is omitted here.

Note that the same components as those in the first embodiment (second embodiment) are denoted by the same reference signs.

The guide vane 61 is a plate-like member that is rectangular in plan view. When one end surface of the guide vane 61 is joined to the one end surface 43a of the peripheral wall 43, the guide vane 61 is curved outward from the one end surface to another end surface thereof located on a side opposite to the one end surface.

According to the silencer cover according to the present embodiment, the guide vanes 61 respectively provided over both the entire end surfaces 43a, 43b of the peripheral wall 43 improve the suction efficiency of the air that flows into the space formed inside of the opening 44, and hence a larger amount of air can be allowed to flow into the space formed inside of the opening 44.

Other operations and effects are the same as those in the first embodiment, and hence description thereof is omitted here.

Note that the present invention is not limited to the above-mentioned embodiments, and can be appropriately modified or changed as needed within a range not departing from a technical idea of the present invention.

For example, in the first embodiment, noise insulation lagging for reducing undesired sounds by attaching a sound absorbing material such as glass wool may be applied to the entire inner surface of the first side wall 41, the entire inner surface of the second side wall 42, and the entire inner surface of the peripheral wall 43, whereby the undesired sounds may be further reduced.

Further, in the above-mentioned embodiments, description is given of one specific example in which the silencer cover covers about one-half of the silencer in the circumferential direction, but the present invention is not limited thereto, and can be appropriately changed as needed.

Moreover, the opening 44 does not necessarily need to face obliquely upward on the side farther from the marine internal combustion engine 1 as in the above-mentioned embodiments, and may face directly sideways or obliquely downward on the side farther from the marine internal combustion engine 1.

Still further, the opening 44 may face an external air intake of a duct for feeding air outside of the ship into the engine room.

This enables lower-temperature air to be more suctioned into the compressor 13 via the silencer 23, and thus can make further lower the temperature of the air that is suctioned into the compressor 13 via the silencer 23.

Still further, a reflective plate (shiny metal plate) that reflects radiant heat may be attached to the entire outer surface of the silencer cover.

This suppresses an increase in temperature of the air that has flown into the silencer cover, and thus can make further lower the temperature of the air that is suctioned into the compressor 13 via the silencer 23.

Still further, the silencer cover and the exhaust turbine turbocharger according to the present invention are not limitatively applicable to only a marine internal combustion engine, and are also applicable to other internal combustion engines such as an internal combustion engine for an onshore power generator.

### {Reference Signs List}

- 1: marine internal combustion engine
- 10: exhaust turbine turbocharger
- 11: turbine
- 12: rotating shaft
- 13: compressor
- 23: silencer
- 34: sound absorbing splitter (sound absorbing element)
- 40: silencer cover
- 41: first side wall
- 41a: one end surface
- 42: second side wall
- 42a: one end surface
- 43: peripheral wall
- 43a: end surface
- 43b: end surface
- 44: opening
- 49: silencer
- 50: silencer cover
- 60: exhaust turbine turbocharger
- 61: guide vane

## Claims

1. A silencer cover that is attached so as to cover a silencer (23; 49) attached to an air suction port of an exhaust turbine turbocharger (10; 60) driven by an internal combustion engine (1), the silencer cover (40; 50) comprising an opening (44), wherein
the opening (44) is formed so as not to face the internal combustion engine (1)
**characterized in that**
the silencer cover (40; 50) comprises
a first side wall (41) that is placed so as to be spaced apart by a predetermined distance from an outer surface of the silencer;
a second side wall (42) that is placed so as to be spaced apart by a predetermined distance from the outer surface; and
a peripheral wall (43) that is placed so as to be spaced apart by a predetermined distance from the outer surface along a circumferential direction, and that is joined to an end surface of the first side wall and an end surface of the second side wall, and
the opening (44) is formed by the first side wall (41), the second side wall (42), and the peripheral wall (43).

2. The silencer cover according to claim 1, wherein the opening (44) faces a side farther from the internal combustion engine (1).

3. The silencer cover (40; 50) according to claim 1 or 2, covering one-half to three-quarters in a circumferential direction, of an outer area of an outer surface of the silencer (23; 40).

4. The silencer cover according to any one of claims 1 to 3, wherein noise insulation lagging is applied to an entire inner surface of the silencer cover.

5. The silencer cover according to any one of claims 1 to 4, wherein a guide vane (61) is provided to the opening (44).

6. An exhaust turbine turbocharger (10; 60) comprising the silencer cover (23; 49) according to any one of claims 1 to 5.

7. An internal combustion engine (1) comprising the exhaust turbine turbocharger (10; 60) according to claim 6.

## Patentansprüche

1. Schalldämpferabdeckung, die so angebracht ist, dass sie einen Schalldämpfer (23; 49) abdeckt, der an einer Luftansaugöffnung eines von einem Verbrennungsmotor (1) angetriebenen Abgasturbinen-Turboladers (10; 60) befestigt ist, wobei die Schalldämpferabdeckung (40; 50) eine Öffnung (44) umfasst, wobei
die Öffnung (44) so ausgebildet ist, dass sie nicht in Richtung des Verbrennungsmotors (1) zeigt,
**dadurch gekennzeichnet** das
die Schalldämpferabdeckung (40; 50)
eine erste Seitenwand (41) umfasst, die so angeordnet ist, dass sie um einen vorbestimmten Abstand von einer Außenfläche des Schalldämpfers beabstandet ist;
eine zweite Seitenwand (42) umfasst, die so angeordnet ist, dass sie um einen vorbestimmten Abstand von der Außenfläche des Schalldämpfers beabstandet ist; und
eine Umfangswand umfasst (43), die so angeordnet ist, dass sie um einen vorbestimmten Abstand von der Außenfläche entlang einer Umfangsrichtung beabstandet ist und die mit einer Endfläche der ersten Seitenwand und mit einer Endfläche der zweiten Seitenwand verbunden ist, und
die Öffnung (44) durch die erste Seitenwand (41), die zweite Seitenwand (42) und die Umfangswand (43) gebildet wird.

2. Schalldämpferabdeckung nach Anspruch 1, wobei die Öffnung (44) in Richtung einer weiter vom Verbrennungsmotor (1) entfernten Seite zeigt.

3. Schalldämpferabdeckung (40; 50) nach Anspruch 1 oder 2, die in einer Umfangsrichtung die Hälfte bis Dreiviertel einer äußeren Fläche einer Außenfläche des Schalldämpfers (23; 40) abdeckt.

4. Schalldämpferabdeckung nach einem der Ansprüche 1 bis 3, wobei schalldämpfende Isolierung auf eine gesamte Innenfläche der Schalldämpferabdeckung aufgetragen ist.

5. Schalldämpferabdeckung nach einem der Ansprüche 1 bis 4, wobei die Öffnung (44) mit einer Leitschaufel (61) versehen ist.

6. Abgasturbinen-Turbolader (10; 60) umfassend die Schalldämpferabdeckung (23; 49) nach einem der Ansprüche 1 bis 5.

7. Verbrennungsmotor (1) umfassend den Abgasturbinen-Turbolader (10; 60) nach Anspruch 6.

## Revendications

1. Couvercle de silencieux qui est attaché de sorte à recouvrir un silencieux (23 ; 49) attaché à un orifice d'aspiration d'air d'un turbocompresseur à suralimentation de turbine d'échappement (10; 60) entraîné par un moteur à combustion interne (1), le couvercle de silencieux (40 ; 50) comprenant une ouverture (44), dans lequel
l'ouverture (44) est formée de sorte à ne pas faire face au moteur à combustion interne (1)
**caractérisé en ce que**
le couvercle de silencieux (40; 50) comprend
une première paroi latérale (41) qui est placée de sorte à être espacée d'une distance prédéterminée d'une surface extérieure du silencieux;
une seconde paroi latérale (42) qui est placée de sorte à être espacée d'une distance prédéterminée de la surface extérieure ; et
une paroi périphérique (43) qui est placée de sorte à être espacée d'une distance prédéterminée de la surface extérieure le long d'une direction circonférentielle, et qui est jointe à une surface d'extrémité de la première paroi latérale et à une surface d'extrémité de la seconde paroi latérale, et
l'ouverture (44) est formée par la première paroi latérale (41), la seconde paroi latérale (42), et la paroi périphérique (43).

2. Couvercle de silencieux selon la revendication 1, dans lequel l'ouverture (44) fait face à un côté plus éloigné du moteur à combustion interne (1).

3. Couvercle de silencieux (40; 50) selon la revendication 1 ou 2, couvrant une moitié à trois quarts, dans une direction circonférentielle, d'une zone extérieure d'une surface extérieure du silencieux (23 ; 40).

4. Couvercle de silencieux selon l'une quelconque des revendications 1 à 3, dans lequel une garniture d'isolation sonore est appliquée à une surface intérieure entière du couvercle de silencieux.

5. Couvercle de silencieux selon l'une quelconque des revendications 1 à 4, dans lequel une aube directrice (61) est fournie à l'ouverture (44).

6. Turbocompresseur à suralimentation de turbine d'échappement (10; 60) comprenant le couvercle de silencieux (23; 49) selon l'une quelconque des revendications 1 à 5.

7. Moteur à combustion interne (1) comprenant le turbocompresseur à suralimentation de turbine d'échappement (10 ; 60) selon la revendication 6.
